# EUROPEAN PATENT APPLICATION

(11) **EP 3 358 648 A1**
(43) Date of publication of application: **08.08.2018**
(21) Application number: 17154604.7
(22) Date of filing: 03.02.2017
(51) Int. Cl.: H01M 2/20, H01M 2/22, H01M 10/052, H01M 10/44

(54) **DEVICE FOR DISCHARGING A BATTERY CELL AND BATTERY CELL**

(71) Applicant: Lithium Energy and Power GmbH & Co. KG, 70469 Stuttgart (DE)
(72) Inventor: Kitano, Shinya, 70174 Stuttgart (DE)
(74) Representative: Bee, Joachim

(57) **Abstract**

The invention concerns a device (50) for discharging a battery cell, comprising a negative port (51) connectable to a negative terminal of the battery cell and a positive port (52) connectable to a positive terminal of the battery cell and an antifuse element (60) electrically connected to the negative port (51) and to the positive port (52). Thereat, a casing (57) of the device (50) for discharging has a prismatic shape and the negative port (51) and the positive port (52) are arranged at opposite end regions of the casing (57). The invention also concerns a battery cell comprising at least one device (50) for discharging a battery cell and a negative cell connector containing the negative terminal and a negative aperture and a positive cell connector containing the positive terminal and a positive aperture, whereat the end regions of the casing (57) of the device (50) for discharging are inserted into the negative aperture and into the positive aperture such that the negative port (51) is electrically connected to the negative terminal and that the positive port (52) is electrically connected to the positive terminal.

## Description

The invention relates to a device for discharging a battery cell which comprises a negative port connectable to a negative terminal of the battery cell and a positive port connectable to a positive terminal of the battery cell and an anti-fuse element electrically connected to the negative port and to the positive port. The invention also relates to a battery cell that comprises at least one device for discharging according to the invention.

### State of the Art

Electrical energy can be stored by means of batteries. Batteries change chemical energy into electrical energy. Particularly, rechargeable batteries are known that can be charged and discharged several times. Batteries or battery modules comprise several battery cells that are connected electrically in series or in parallel.

Especially, lithium ion battery cells are used in rechargeable batteries or battery systems. Lithium ion battery cells have a relatively high energy density. Lithium ion battery cells are used for instance in motor vehicles, in particular in electric vehicles (EV), in hybrid electric vehicles (HEV) and in plug-in hybrid vehicles (PHEV). Lithium ion battery cells may comprise one or more electrode assemblies.

A battery cell has a positive electrode called cathode and a negative electrode called anode. The anode and the cathode are separated from one another by means of a separator. The electrodes of the battery cell are formed like foils and are wound with interposition of the separator to form an electrode roll, also referred to as jelly-roll. Alternatively, the electrodes can be layered to form an electrode stack.

The electrodes of the battery cell are connected to terminals of the battery cell. The electrodes of the battery cell are arranged within a housing. The terminals protrude from said housing. The battery cell can be charged and discharged by means of the terminals. For connecting several battery cells electrically in series or in parallel, the terminals of the battery cells are connected to respective connector elements.

To avoid critical situations of battery cells, discharging devices are known. Such a discharging device permits discharging of a battery cell when the discharging device is connected to the terminals of the battery cell by a discharging current flowing through.

Document DE 10 2014 107 287 A1 discloses a device for bypassing a battery cell. The device comprises an anti-fuse element which is connected to a negative terminal and to a positive terminal of the battery cell. In normal operation, the anti-fuse element behaves like a diode. If polarity of the terminals is reversed, the anti-fuse element is converted irreversibly into a conducting, low ohmic connection.

Document EP 2 642 582 B1 discloses an electrical bypass element, in particular for the cells of an energy accumulator. The bypass element comprises two electrical conductors between which a layer sequence is formed that comprises an electrical insulation layer and one or more reactive layer stacks in which an exothermic reaction can be triggered.

Document EP 2 777 979 A2 discloses a battery module containing a fast discharging circuit. Said fast discharging circuit comprises an ohmic resistor and a switch connected in series with the ohmic resistor. When the switch is activated by a separate control unit, a discharging current is flowing through the ohmic resistor.

Document DE 10 2015 200 276 A1 discloses a device for discharging a battery cell. The devices contains switching elements the can be controlled by an activation unit. When the switching elements are closed, a discharging current is flowing through the switching elements.

Document DE 10 2014 210 390 A1 shows battery cells having different kinds of housings. Inter alia, a battery cell in form of a pouch cell is shown. Said pouch cell has a prismatic shape and the housing is formed of a soft material, in particular of an aluminium foil.

### Disclosure of the Invention

A device for discharging a battery cell is proposed, whereat the device for discharging comprises a negative port which is connectable to a negative terminal of the battery cell and a positive port which is connectable to a positive terminal of the battery cell and an anti-fuse element which is electrically connected to the negative port and to the positive port. A respective anti-fuse element is for example described in document EP 2 642 582 B1.

According to the invention, the device for discharging a battery cell comprises a casing whereat the casing of the device for discharging has a prismatic shape, and the negative port of the device for discharging and the positive port of the device for discharging are arranged at opposite end regions of the casing.

According to a preferred embodiment of the invention, the device for discharging a battery cell contains a negative bus bar and a positive bus bar which are formed as flat elements. Thereat, the anti-fuse element which is preferably also formed as a flat element is arranged between the negative bus bar and the positive bus bar.

Preferably, the negative port of the device for discharging is formed at the negative bus bar, in particular at a region of the negative bus bar at the far side of the anti-fuse element. Further preferably, the positive port of the device for discharging is formed at the positive bus bar, in particular at a region of the positive bus bar at the far side of the anti-fuse element.

According to a preferred embodiment of the invention, the casing of the device for discharging is made of an electrically insulating material, in particular a plastic material. Thereat, the anti-fuse element is arranged inside the casing which is made of an electrically insulating material. In particular, the anti-fuse element is moulded within said electrically insulating material and hence does not protrude to any surface of the casing.

According to an advantageous embodiment of the invention, the negative port and the positive port of the device for discharging are arranged inside the casing. Thereat, the casing comprises a negative opening for insertion of the negative terminal of the battery cell and a positive opening for insertion of the positive terminal of the battery cell. The negative port of the device for discharging is arranged within the casing such that the negative terminal of the battery cell is in contact with the negative port when inserted into the negative opening of the casing. The positive port of the device for discharging is arranged within the casing such that the positive terminal of the battery cell is in contact with the positive port when inserted into the positive opening of the casing.

Preferably, the casing of the device for discharging comprises a negative bore ending in the negative opening of the casing and a positive bore ending in the positive opening of the casing. Said bores in the casing serve for insertion of respective screws for fastening the device for discharging to the negative terminal of the battery cell and to the positive terminal of the battery cell.

According to a further advantageous embodiment of the invention, the negative port of the device for discharging is arranged at a side surface of the casing and the positive port of the device for discharging is arranged at a side surface of the casing. Thereby, the negative terminal of the battery cell can be connected externally to the negative port of the device for discharging and the positive terminal of the battery cell can be connected externally to the positive port of the device for discharging. Openings in the casing for insertion of terminals are not necessary.

Advantageously, the negative port of the device for discharging and the positive port of the device for discharging are arranged at the same side surface of the casing. That means, one side surface of the casing having a prismatic shape contains both ports of the device for discharging.

Furthermore, a battery cell is proposed that comprises at least one device for discharging a battery cell according to the invention. The battery cell further comprises a negative cell connector and a positive cell connector. The negative cell connector contains the negative terminal and a negative aperture. The positive cell connector contains the positive terminal and a positive aperture. Thereat, the end regions of the casing of the device for discharging are inserted into the negative aperture and into the positive aperture of the cell connectors such that the negative port of the device for discharging is electrically connected to the negative terminal of the battery cell and that the positive port of the device for discharging is electrically connected to the positive terminal of the battery cell.

A battery cell according to the invention is usable advantageously in particular in an electric vehicle (EV), in a hybrid electric vehicle (HEV) or in a plug-in hybrid vehicle (PHEV) or stationary.

### Advantages of the Invention

The invention allows an easy connection of the device for discharging a battery cell to the battery cell. Caused by the shape of the device for discharging, space can be saved and volume occupancy can be improved. Thereat, the inventive device for discharging can be applied to battery cells of pouch type as well as to battery cells having a hard housing.

### Brief Description of the Drawings

For a better understanding of the aforementioned embodiments of the invention as well as additional embodiments thereof, reference should be made to the description of embodiments below, in conjunction with the appended drawings showing:
- Figure 1: a partly transparent perspective view at a device for discharging a battery cell according to a first embodiment,
- Figure 2: a sectional view at a battery cell with a device for discharging according to the first embodiment,
- Figure 3: a partly transparent perspective view at an end region of a device for discharging a battery cell according to a modification of the first embodiment,
- Figure 4: a sectional view at a device for discharging a battery cell according to a second embodiment,
- Figure 5: a sectional view at a device for discharging a battery cell according to a modification of the second embodiment and
- Figure 6: a perspective view at a battery cell with a device for discharging according to the second embodiment.

Hereinafter, preferred embodiments of the present invention will be described with reference to the drawings. The drawings only provide schematic views of the invention. Like reference numerals refer to corresponding parts, elements or components throughout the figures, unless indicated otherwise.

### Description of Embodiments

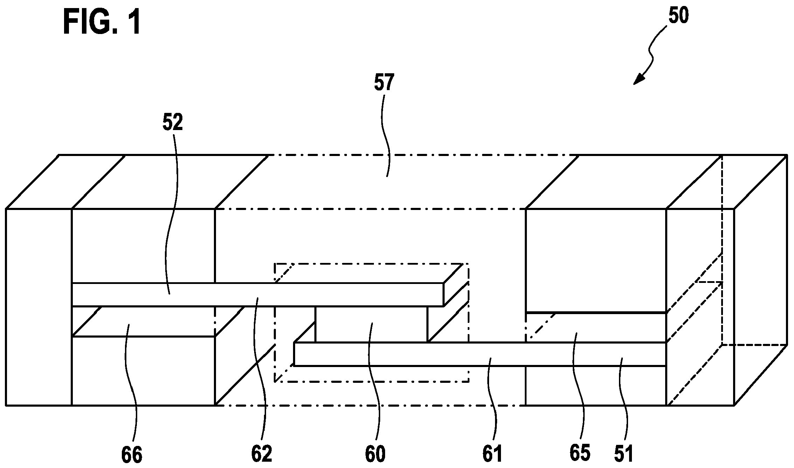

Figure 1 shows a partly transparent perspective view at a device 50 for discharging a battery cell 2 according to a first embodiment. The device 50 for discharging comprises a casing 57. The casing 57 of the device 50 for discharging has a prismatic shape. Furthermore, the casing 57 is made of an electrically insulating material, in particular a plastic material.

An anti-fuse element 60 is arranged inside the casing 57. In normal operation, the anti-fuse element 60 behaves like a diode and blocks current in one direction. If an applied voltage exceeds a defined value or polarity of the applied voltage is reversed, the anti-fuse element 60 is converted irreversibly into a conducting, low ohmic connection.

The device 50 for discharging contains a negative bus bar 61 and a positive bus bar 62. The negative bus bar 61 and the positive bus bar 62 are formed as flat elements. The anti-fuse element 60 is also formed as a flat element. Thereat, the anti-fuse element 60 is arranged between the negative bus bar 61 and the positive bus bar 62.

The device 50 for discharging comprises a negative port 51. The negative port 51 of the device 50 for discharging is formed at the negative bus bar 61 at a region of the negative bus bar 61 at the far side of the anti-fuse element 60. The device 50 for discharging comprises a positive port 52. The positive port 52 of the device 50 for discharging is formed at the positive bus bar 62 at a region of the positive bus bar 62 at the far side of the anti-fuse element 60.

Hence, the anti-fuse element 60 of the device 50 for discharging is electrically connected to the negative port 51 of the device 50 for discharging and to the positive port 52 of the device 50 for discharging. Thereat, the negative port 51 and the positive port 52 are arranged at opposite end regions of the casing 57 of the device 50 for discharging.

The negative port 51 of the device 50 for discharging and the positive port 52 of the device 50 for discharging are arranged inside the casing 57. Thereat, the casing 57 comprises a negative opening 65 for insertion of a negative terminal 15 of the battery cell 2 and a positive opening 66 for insertion of a positive terminal 16 of the battery cell 2.

The negative port 51 of the device 50 for discharging is arranged within the casing 57 such that the negative terminal 15 of the battery cell 2 is electrically connected to the negative port 51 when inserted into the negative opening 65 of the casing 57. Furthermore, the positive port 52 of the device 50 for discharging is arranged within the casing 57 such that the positive terminal 16 of the battery cell 2 is electrically connected to the positive port 52 when inserted into the positive opening 66 of the casing 57.

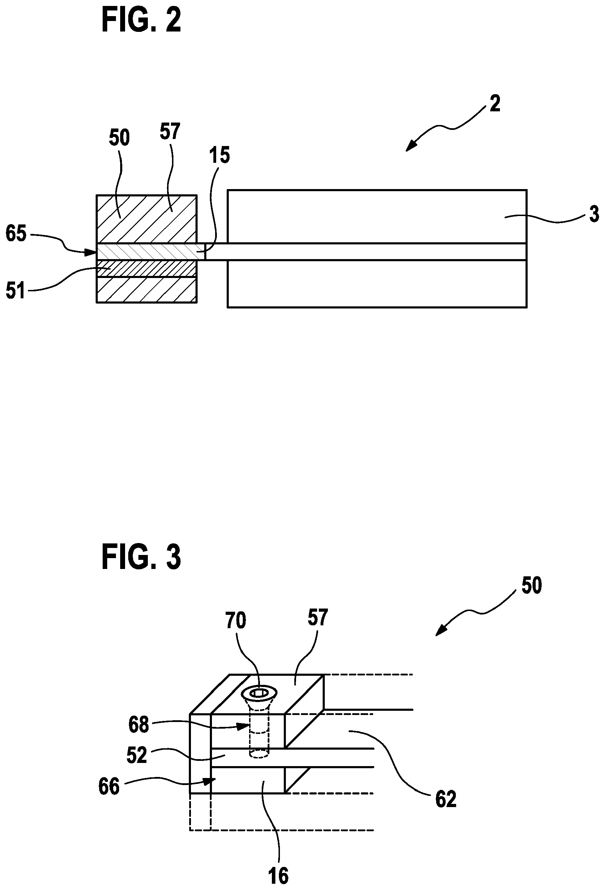

Figure 2 shows a sectional view at a battery cell 2 with the device 50 for discharging according to the first embodiment given in figure 1. The negative terminal 15 and the positive terminal 16 protrude from a housing 3 of the battery cell 2 parallel to one another. The negative terminal 15 and the positive terminal 16 of the battery cell 2 are shaped as flat bars. In the presentation given here, the positive terminal 16 is hidden by the negative terminal 15 and hence is not visible.

The negative terminal 15 of the battery cell 2 is inserted into the negative opening 65 of the casing 57 of the device 50 for discharging. Thereat, the negative terminal 15 of the battery cell 2 is electrically connected to the negative port 51 of the device 50 for discharging. The positive terminal 16 of the battery cell 2 is inserted into the positive opening 66 of the casing 57 of the device 50 for discharging. Thereat, the positive terminal 16 of the battery cell 2 is electrically connected to the positive port 52 of the device 50 for discharging.

Figure 3 shows a partly transparent perspective view at an end region of the device 50 for discharging a battery cell 2 according to a modification of the first embodiment given in figure 1. Thereby, only the end region containing the positive port 52 is shown here.

The casing 57 of the device 50 for discharging comprises a positive bore 68 ending in the positive opening 66 of the casing 57. A screw 70 is inserted into the positive bore 68 in the casing 57 for fastening the device 50 for discharging to the positive terminal 16 of the battery cell 2. Thereat, the positive terminal 16 of the battery cell 2 is inserted into the positive opening 66 of the casing 57.

The casing 57 of the device 50 for discharging also comprises a negative bore which is not shown her ending in the negative opening 65 of the casing 57. A screw 70 is also inserted into the negative bore in the casing 57 for fastening the device 50 for discharging to the negative terminal 15 of the battery cell 2. Thereat, the negative terminal 15 of the battery cell 2 is inserted into the negative opening 65 of the casing 57. Alternatively, the device 50 for discharging could also be fastened by springs or by other means to the terminals 15, 16 of the battery cell 2.

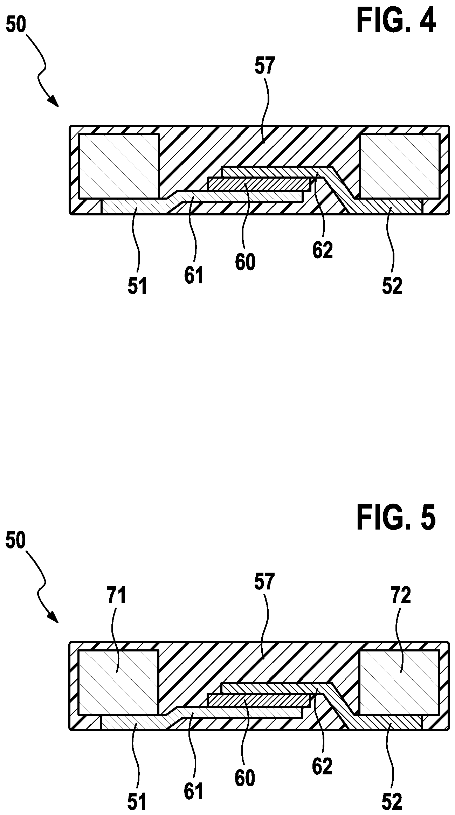

Figure 4 shows a sectional view at a device 50 for discharging a battery cell 2 according to a second embodiment. The device 50 for discharging comprises a casing 57. The casing 57 of the device 50 for discharging has a prismatic shape.

Furthermore, the casing 57 is made of an electrically insulating material, in particular a plastic material.

An anti-fuse element 60 is arranged inside the casing 57. In normal operation,
the anti-fuse element 60 behaves like a diode and blocks current in one direction. If an applied voltage exceeds a defined value or polarity of the applied voltage is reversed, the anti-fuse element 60 is converted irreversibly into a conducting, low ohmic connection.

The device 50 for discharging contains a negative bus bar 61 and a positive bus bar 62. The negative bus bar 61 and the positive bus bar 62 are formed as flat elements. The anti-fuse element 60 is also formed as a flat element. Thereat, the anti-fuse element 60 is arranged between the negative bus bar 61 and the positive bus bar 62.

The device 50 for discharging comprises a negative port 51. The negative port 51 of the device 50 for discharging is formed at the negative bus bar 61 at a region of the negative bus bar 61 at the far side of the anti-fuse element 60. The device 50 for discharging comprises a positive port 52. The positive port 52 of the device 50 for discharging is formed at the positive bus bar 62 at a region of the positive bus bar 62 at the far side of the anti-fuse element 60.

Hence, the anti-fuse element 60 of the device 50 for discharging is electrically connected to the negative port 51 of the device 50 for discharging and to the positive port 52 of the device 50 for discharging. Thereat, the negative port 51 and the positive port 52 are arranged at opposite end regions of the casing 57 of the device 50 for discharging.

The negative port 51 of the device 50 for discharging is arranged at a side surface of the casing 57 and the positive port 52 of the device 50 for discharging is arranged at a side surface of the casing 57. Thereat, the negative port 51 and the positive port 52 of the device 50 for discharging are arranged at the same side surface of the casing 57 which has a prismatic shape. Thus, one side surface of the casing 57 contains both ports 51, 52 of the device 50 for discharging.

Figure 5 shows a sectional view at the device 50 for discharging a battery cell 2 according to a modification of the second embodiment given in figure 4. The device 50 for discharging according to the modification of the second embodiment additionally comprises a negative contact part 71 which is in direct contact to the negative bus bar 61 and a positive contact part 72 which is in direct contact to the positive bus bar 62. The contact parts 71, 72 are also arranged within the casing 57.

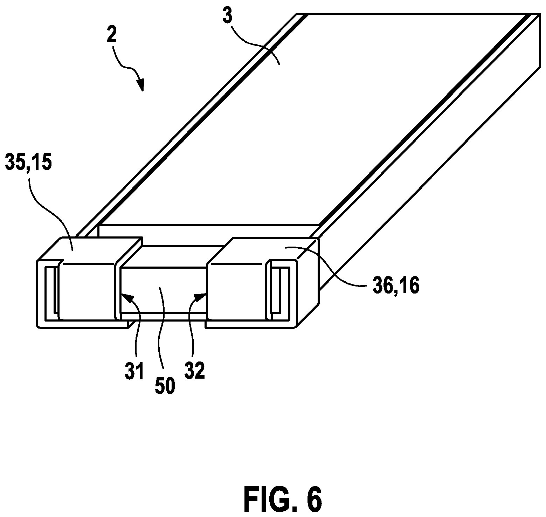

Figure 6 shows a perspective view at a battery cell 2 with a device 50 for discharging according to the second embodiment shown in figure 4. The battery cell 2 contains a housing 3 which is of pouch type and which has a prismatic shape. The battery cell 2 further contains an electrode assembly which is arranged within the housing 3. The housing 3 is a bag or a pouch made of a soft material that surrounds the electrode assembly.

The electrode assembly contains an anode that is electrically connected to the negative terminal 15 of the battery cell 2. The electrode assembly also contains a cathode that is electrically connected to the positive terminal 16 of the battery cell 2. The electrode assembly further contains a separator that is arranged between the anode and the cathode.

The battery cell 2 comprises a negative cell connector 35 having a prismatic shape. Thereat, the negative cell connector 35 contains the negative terminal 15 of the battery cell 2. The battery cell 2 also comprises a positive cell connector 36 having a prismatic shape. Thereat, the positive cell connector 36 contains the positive terminal 16 of the battery cell 2.

The negative cell connector 35 also contains a negative aperture 31 and the positive cell connector 36 also contains a positive aperture 32. The end regions of the casing 57 of the device 50 for discharging are inserted into the negative aperture 31 and into the positive aperture 32 of the cell connectors 35, 36 such that the negative port 51 of the device 50 for discharging is electrically connected to the negative terminal 15 of the battery cell 2 and that the positive port 52 of the device 50 for discharging is electrically connected to the positive terminal 16 of the battery cell 2. In the presentation given, the ports 51, 52 of the device 50 for discharging are hidden by the cell connectors 35, 36 and hence are not visible here.

The negative cell connector 35 and the positive cell connector 36 are spaced apart. Thereat, the negative aperture 31 in the negative cell connector 35 and the positive aperture 32 in the positive cell connector 36 are arranged as to face one another.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings and those encompassed by the attached claims. The embodiments were chosen and described in order to explain the principles of the invention and its practical applications, to thereby enable others skilled in the art to utilize the invention and various embodiments with various modifications as are suited to the particular use contemplated.

## Claims

1. Device (50) for discharging a battery cell (2), comprising
a negative port (51) connectable to a negative terminal (15) of the battery cell (2) and
a positive port (52) connectable to a positive terminal (16) of the battery cell (2) and
an anti-fuse element (60) electrically connected to the negative port (51) and to the positive port (52),
**characterised in that**
a casing (57) of the device (50) for discharging has a prismatic shape and that
the negative port (51) and the positive port (52) are arranged at opposite end regions of the casing (57).

2. Device (50) for discharging according to claim 1, **characterised in that**
the anti-fuse element (60) is arranged between a negative bus bar (61) and a positive bus bar (62).

3. Device (50) for discharging according to claim 2, **characterised in that**
the negative port (51) is formed at the negative bus bar (61) and
the positive port (52) is formed at the positive bus bar (62).

4. Device (50) for discharging according to one of the preceding claims, **characterised in that**
the anti-fuse element (60) is arranged inside the casing (57) which is made of an electrically insulating material.

5. Device (50) for discharging according to one of the preceding claims, **characterised in that**
the negative port (51) and the positive port (52) are arranged inside the casing (57) and that the casing (57) comprises a negative opening (65) for insertion of the negative terminal (15) and a positive opening (66) for insertion of the positive terminal (16).

6. Device (50) for discharging according to claim 5, **characterised in that** the casing (57) comprises
a negative bore ending in the negative opening (65) and
a positive bore (68) ending in the positive opening (66).

7. Device (50) for discharging according to one of claims 1 to 4,
**characterised in that**
the negative port (51) is arranged at a side surface of the casing (57) and
the positive port (52) is arranged at a side surface of the casing (57).

8. Device (50) for discharging according to claim 7, **characterised in that** the negative port (51) and the positive port (52) are arranged at the same side surface of the casing (57).

9. Battery cell (2) comprising at least one device (50) for discharging according to one of claims 7 to 8 and
a negative cell connector (35) containing the negative terminal (15) and a negative aperture (31) and
a positive cell connector (36) containing the positive terminal (16) and a positive aperture (32), whereat
the end regions of the casing (57) of the device (50) for discharging are inserted into the negative aperture (31) and into the positive aperture (32) such that
the negative port (51) is electrically connected to the negative terminal (15) and that
the positive port (52) is electrically connected to the positive terminal (16).

10. Usage of a battery cell (2) according to claim 9,
in an electric vehicle (EV), in a hybrid electric vehicle (HEV), in a plug-in hybrid vehicle (PHEV) or stationary.
